# EUROPEAN PATENT APPLICATION

(11) **EP 4 462 303 A1**
(43) Date of publication of application: **13.11.2024**
(21) Application number: 22926916.2
(22) Date of filing: 21.02.2022
(51) Int. Cl.: G06K 7/08, G06F 18/00, G06F 3/044, G08C 17/06, H04L 7/02, G06F 21/34

(54) **SYSTEM, METHOD AND CARD FOR USER AUTHENTICATION AND/OR AUTHORISATION**

(71) Applicant: Telefónica Cybersecurity & Cloud Tech, S.L., 28050 Madrid (ES)
(72) Inventor: DE LOS SANTOS VÍLCHEZ, Sergio, 28050 Madrid (ES); NÚÑEZ-ROMERO CASADO, Álvaro, 28050 Madrid (ES)
(74) Representative: Carlos Hernando, Borja
(86) International application number: PCT/ES2022/070088
(87) International publication number: WO 2023/156688

(57) **Abstract**

A system, method and card for user authentication and/or authorization are disclosed. The system comprises a computing device with a capacitive screen and a card having a surface that includes a matrix of capacitive points. The card further includes, embedded therein, a controller, a time element connected to said controller, a battery configured to power supply said controller and said time element, and a memory configured to store at least one portion of at least one authentication and/or authorization code pattern for a user, the at least one authentication and/or authorization code pattern being represented through some activated capacitive points of said matrix of capacitive points. The capacitive points are activated by the controller executing a given transmission sequence involving using a reference indicator as a marker, and serially activating the capacitive points, wherein when the activation of the capacitive points is completed said transmission sequence is repeated.

## Description

### Technical Field

Present invention relates to a system, a method and an electronic card for user authentication and/or authorization. In particular, the proposed card includes a matrix of configurable and invisible capacity points, that can be activated on the basis of a seed and a function of time, guaranteeing a secure access to the authorized user.

### Background of the Invention

Some types of authentication and/or authorization interactions on computing systems are still vulnerable. To reduce or prevent this vulnerability different authentication and/or authorization factors exist. For example, 2FA algorithms such as OTP (RFC 2289) y TOTP (RFC 6238), among others, are often executed using a physical token, such as a number generator that generates a 6-digit code on the basis of a seed and a function of time, being the token synchronized with an absolute time reference. However, these devices are yet prone to stealing and to shoulder sniffing, even if the obtained information should be used timely in order to compromise the target.

There has also been some innovations in storing and conveying data using capacitive connections between electronic devices and cards. For instance, US10510070B2 discloses a dynamic transaction card that includes a number of layers, each of which may be interconnected to one another. For example, a dynamic transaction card may include an outer layer, a potting layer, a sensor layer, a display layer (including, for example, LEDs, a dot matrix display, and the like), a microcontroller/microprocessor storing firmware, Java applets, Java applet integration, and the like, an EMV processor, an energy storage component, one or more antenna (e.g., Bluetooth antenna, NFC antenna, and the like), a power management component, a flexible printed circuit board (PCB), a chassis, and/or a card backing layer. A display layer may include enhanced features such as the use of LED display components as a photosensor. Unlike present patent application, the authentication configuration is visible, and hence copiable, even if dynamic. The power consumption of a display is much higher than the one of a matrix of configurable capacitive points, which is of utter importance when considering a portable device with limited size.

US10657520B2 discloses a dynamic transaction card and methods for providing improved security during transactions. The dynamic transaction card can attempt to connect wirelessly to a mobile device. The dynamic transaction card can then send a transaction request to a backend system, including whether the connection to the mobile device was successful. The backend system can then calculate a fraud score based on the connection response, among other things. The backend system may approve or deny the transaction request from the dynamic transaction card based on the fraud score. Unlike present patent application, the authentication communication happens through a standard wireless communication channel and can hence be listened to or attacked in other well-known ways. Furthermore, the power consumption of a wireless communication is much higher than the one of a matrix of configurable capacitive points, which is of utter importance when considering a portable device with limited size.

WO2016005496A1 discloses the use of a method to authenticate one or more users by means of the capacitive information carrier and a device comprising a capacitive surface sensor. The capacitive points form a unique pattern (not configurable) which is red by a capacitive screen. Unlike present patent application, this solution does not use a configurable card. The card cannot hence implement an authentication method depending on the time nor on the specific service for which the user is authenticating.

US9111406B2 provides devices and systems for the transfer of information using multipoint contact on a capacitive surface. The device comprises a first surface having a plurality of contact points arranged in a pattern and a second surface having a contact area electrically connected to the plurality of contact points, whereby the plurality of contact points on the first surface is activated by a user contacting the contact area on the second surface. Unlike present patent application, this solution neither uses a configurable card.

US9832644B2 discloses a method for hybrid hardware authentication that comprises at a first electronic system having a capacitive touch sensor, detecting a capacitive hardware interaction between the hybrid hardware tool and the capacitive touch sensor; generating capacitive identification data based on the detected capacitive hardware interaction; at a second electronic system communicatively coupled to the first electronic system, detecting a short-range wireless interaction between the hybrid hardware tool and the second electronic system; generating wireless identification data based on the detected short-range wireless interaction; and at a third electronic system communicatively coupled to the first and second electronic systems, performing a first action based on a combination of the wireless identification data and the capacitive identification data. This solution neither uses a configurable card. The card cannot hence implement an authentication method depending on the time nor on the specific service for which the user is authenticating.

### Description of the Invention

The object of the present invention is thus to provide an enhanced solution for user authentication and/or authorization using a card with activable (configurable) capacitive points, that are activated on the basis of a seed and a function of time (and hence complying with current 2FA standard algorithms), guaranteeing a secure access to the authorized user. This object is fulfilled by a system with the characteristics of claim 1, by a method with the features of claim 6 and by a card with the features of claim 15.

The solution provided by present invention is immune to shoulder sniffing, avoids human error in copying a code, allows usage for authenticate a user for different services, and allows to encode metadata, among others.

To that end, according to one aspect, a system for user authentication and/or authorization is proposed. The system comprises a computing device with a capacitive screen (e.g. a mobile phone, a tablet, or even a laptop or PC having a capacitive trackpad, among others), and a card having a surface that includes a matrix of capacitive points. The card includes, embedded therein, a controller, a time element connected to said controller, a battery to power supply said controller and time element, and a memory to store at least one portion of at least one authentication and/or authorization code pattern for a user, the at least one authentication and/or authorization code pattern being represented through some activated capacitive points of said matrix of capacitive points. The capacitive points are activated by the controller executing a given transmission sequence, said transmission sequence comprising using a reference indicator as a location and/or synchronization marker, and serially activating the capacitive points, wherein when the activation of the capacitive points is completed said transmission sequence is repeated. Such that, when the surface of the card is placed in direct contact with the capacitive screen, the computing device is configured to sense and translate the activated capacitive points to a corresponding user authentication and/or authorization code number.

In an embodiment, the memory is further configured to store at least one portion of a plurality of different authentication and/or authorization code patterns for the user, where each one of the different authentication and/or authorization code patterns are representable through some activated capacitive points of the matrix of capacitive points.

In an embodiment, the computing device is configured to store another portion of the at least one authentication and/or authorization code pattern or of the different authentication and/or authorization code patterns. Alternatively, the memory is configured to store all the portions of the at least one authentication and/or authorization code pattern or of the different authentication and/or authorization code patterns.

In an embodiment, the card also includes embedded therein a communication port, physical or wireless, to charge the battery, synchronize the time element and/or to select a given service for which to authenticate and/or authorize the user.

In yet some embodiments, the card can also include a switch and one or more light indicators.

Present invention also proposes, according to another aspect, a method for user and/or authorization. The method comprises providing a card having a surface that includes a matrix of capacitive points, the card further having embedded therein a controller, a time element connected to the controller, a battery for power supply the time element and the controller, and a memory storing at least one portion of at least one authentication and/or authorization code pattern for a user; providing, by the controller, the at least one authentication and/or authorization code pattern by activating some of the capacitive points of the matrix of capacitive points following a given transmission sequence, said transmission sequence comprising using a reference indicator as a location and/or synchronization marker and serially activating the capacitive points, wherein when the activation of the capacitive points is completed said transmission sequence is repeated; and once the card is placed in direct contact with a capacitive screen of a computing device, the computing device sensing and translating the activated capacitive points to a corresponding user authentication and/or authorization code number.

In some embodiments, the reference indicator is used during a given period of time, which establishes a transmission rate at which to perform the serial activation of the capacitive points.

In some embodiments, the serial activation of the capacitive points comprises activating the capacitive points one by one.

In some embodiments, the memory additionally stores at least one portion of a plurality of different authentication and/or authorization code patterns for the user, where each one of said different authentication and/or authorization code patterns are representable through some activated capacitive points of the matrix of capacitive points.

In some embodiments, the computing device stores another portion of the at least one authentication and/or authorization code pattern or of the different authentication and/or authorization code patterns.

In some embodiments, the memory stores all the portions of the at least one authentication and/or authorization code pattern or of the different authentication and/or authorization code patterns.

In some embodiments, the method further comprises charging the battery and/or synchronizing the time element via a communication port, physical or wireless, embedded in the card.

In some embodiments, the method further comprises using the communication port embedded in the card to select a given service for which to authenticate and/or authorize the user.

In some embodiments, the method further comprises using a switch embedded in the card to select a given service for which to authenticate and/or authorize the user and signaling the selected given service by means of one or more light indicators embedded in the card.

In some embodiments, the reference indicator comprises one or more reference points, which is/are external to the at least one authentication and/or authorization code pattern. Alternatively, the reference indicator comprises a flashing signal.

Present invention also proposes, according to another aspect, a card for user authentication and/or authorization, the card having a surface that includes a matrix of capacitive points and including, embedded therein a controller, a time element connected to said controller, a battery configured to power supply said controller and said time element, and a memory configured to store at least one portion of at least one authentication and/or authorization code pattern for a user, the at least one authentication and/or authorization code pattern being represented through some activated capacitive points of said matrix of capacitive points. The controller is configured to activate the capacitive points by means of executing a given transmission sequence, said transmission sequence comprising using a reference indicator as a location and/or synchronization marker, and serially activating the capacitive points, wherein when the activation of the capacitive points is completed said transmission sequence is repeated.

The card for their management and configuration, can be connected via cable to a software or make use of low-power wireless technologies such as Bluetooth.

### Brief Description of the Drawings

The previous and other advantages and features will be more fully understood from the following detailed description of embodiments, with reference to the attached figures, which must be considered in an illustrative and non-limiting manner, in which:
Fig. 1 illustrates an embodiment of the proposed card.
Fig. 2 illustrates a possible implementation of the encoding of the 6-digits code, where each row represents a digit, and every column represents a value. In this case, the code 032529 is represented. Black dots are activated capacity points, white dots are unactive capacity points.
Fig. 3 illustrates a possible implementation of the 6-digits code, where the points in the first column are used as reference. In this case, the code 032529 is represented. Black dots are activated capacity points, white dots are unactive capacity points.
Fig. 4 illustrates a possible implementation of the 6-digits code, where two points are used as reference (the black ones), which are external to the matrix. In this case, the code 032529 is represented. Black dots are activated capacity points, white dots are unactive capacity points.
Fig. 5 illustrates a possible implementation of the solution including only 4 configurable capacitive points. The black dots are activated capacity points, while the white dots are unactive capacity points.
Fig. 6 illustrates possible implementation of the 6-digits code, where the different digits are represented in sequence and after a synchronization pattern. In this case, the code 032529 is represented. Black dots are activated capacity points, white dots are unactive capacity points.
Fig. 7 illustrates another embodiment of the implementation and communication of the code, in this case using a 3x3 matrix.
Fig. 8 illustrates another embodiment of the implementation and communication of the code, in this case using a 2x2 matrix.

### Detailed Description of Preferred Embodiments

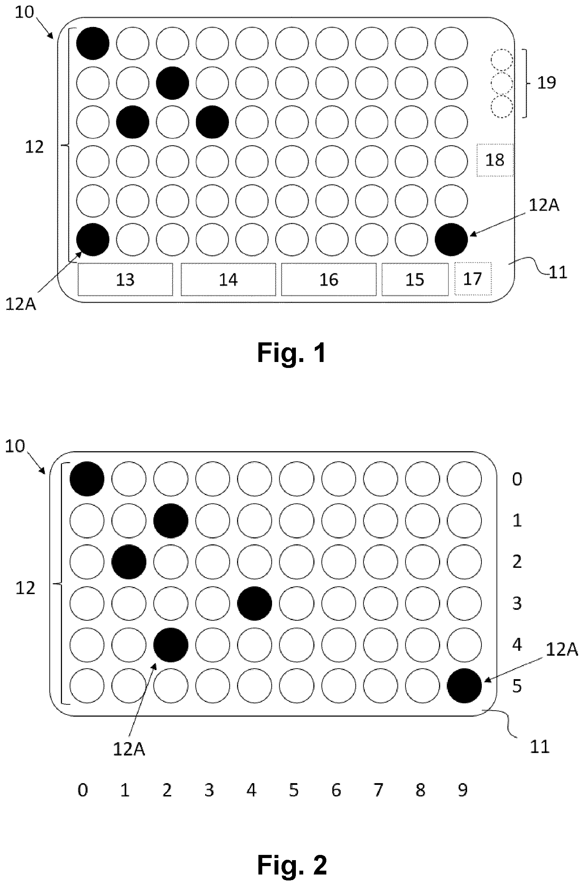

Present invention includes an electronic device, which may be of the size of a standard credit card 10 (see Fig. 1 for an embodiment thereof), with a flat surface 11. The surface 11 includes a matrix of capacitive points 12 that can be activated or not on the basis of the instructions provided by a controller 13 (e.g. a microcontroller) embedded in the card 10.

The activated capacitive points 12A represent an authentication and/or authorization code, or simply code, which can be a numeric code compatible with the current standard of 2FA, or any other custom code, on the basis of the specific need of the application using it. Therefore, when the card 10 is placed in direct contact with a capacitive screen of a computing device (e.g.., smartphone, a tablet, among others), the computing device is able to sense the set of active capacitive points 12A and to translate it to the corresponding code number. It should be noted that, as a further security measure, the computing device itself could contain a part of the code, so that the user identity is authenticated on the basis of the device-card pair, making it harder to steal.

The controller 13 is responsible of the generation of the code (as a function of the time, as in the current standard 2FA devices, for instance), as well as the corresponding activation of the capacitive points 12. The controller 13 is powered by a battery 15 that is also embedded in the card 10. The absolute time reference for the code generation, if the codes are generated as function of time and of a seed, are given by a time element 14 embedded in the card 10, for example a real time controller (RTC) or a clock. To store the seed(s) (i.e. the portion(s) of the code) the card additionally embeds a memory 16.

In the embodiment of Fig. 1, the card 10 further has a communication port 17, being it physical or wireless (e.g., Bluetooth). Likewise, in this particular embodiment, the card 10 also includes a switch/key 18 and a plurality of light indicators 19 such as LEDs. It should be noted that all these elements are optional; therefore in other embodiments the card 10 may not embed them or simply embed some of them.

All the different elements embedded in the card 10 are interconnected with the controller 13, including the matrix of capacitive points 12.

The communication port 17 can be used to, among others, charge the battery 15 and/or synchronize the time element 14. Furthermore, if the card 10 is used to authenticate the user at different services, the communication port 17 can be used to select the correct service for which to generate the code (i.e., to select the corresponding seed). As an alternative, this can be done using the switch/key 18, eventually signaling to the user which service has been selected through the light indicators 19.

The code representation through the matrix of capacitive points 12 in the card 10 can be accomplished using different encoding options. Fig. 2 represents one of such possible encoding options, in which each row represents a digit, and for each row a value is selected on the basis of the activated capacitive point 12A (0: none, 1: the first, etc.). Note that the solution in said Fig. 2 (referred as case A) should always be able to identify the card position and orientation, as well as the identity of the activated points 12A. A possible solution can be to ask - through the capacitive screen of the computing device - for the user to place the card 10 in a specific position and orientation. In this case, one fewer column can be used as reference indicator, being the "0" encoded through no activated capacitive point 12.

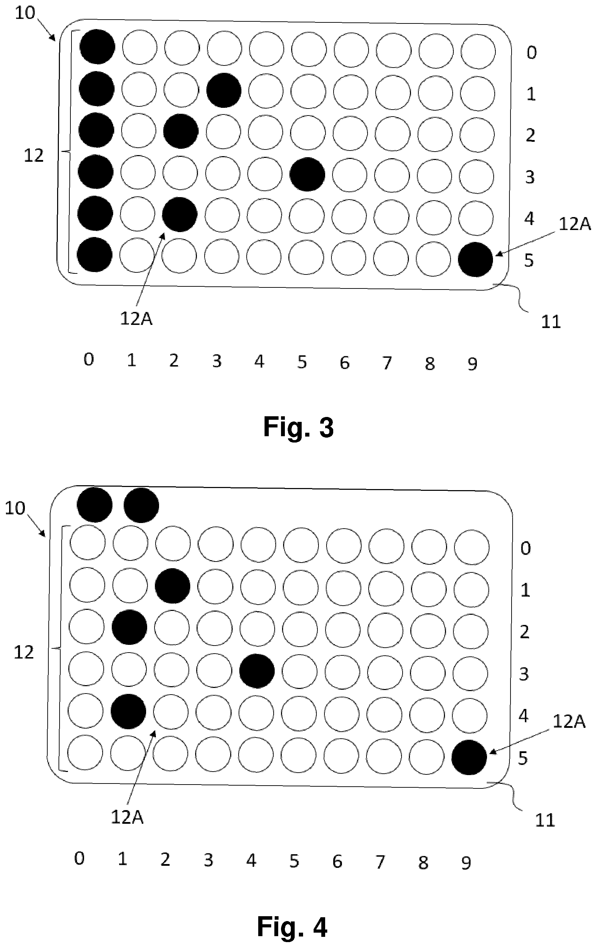

Another possible solution can be to always activate a predetermined set of capacitive points 12A, which will be excluded from the code in case other capacitive points 12 are activated in the same row (this implementation will be referred as case B). An example of this implementation is illustrated in Fig. 3, where the "zeros" are activated as reference indicator, allowing to prevent problems due to the card symmetry. If another capacitive point 12 is activated in the same row, the zero point is discarded from the code calculation. If no other point is activated in the row, the zero is also accounted for as a code digit.

A third implementation (referred as case C), which is illustrated in Fig. 4, can be to use two fix points as reference indicator, these two points being external to the code matrix. The two points are at a between among them which is not possible among any other point pair, and no ambiguities in the card orientation nor points are hence possible.

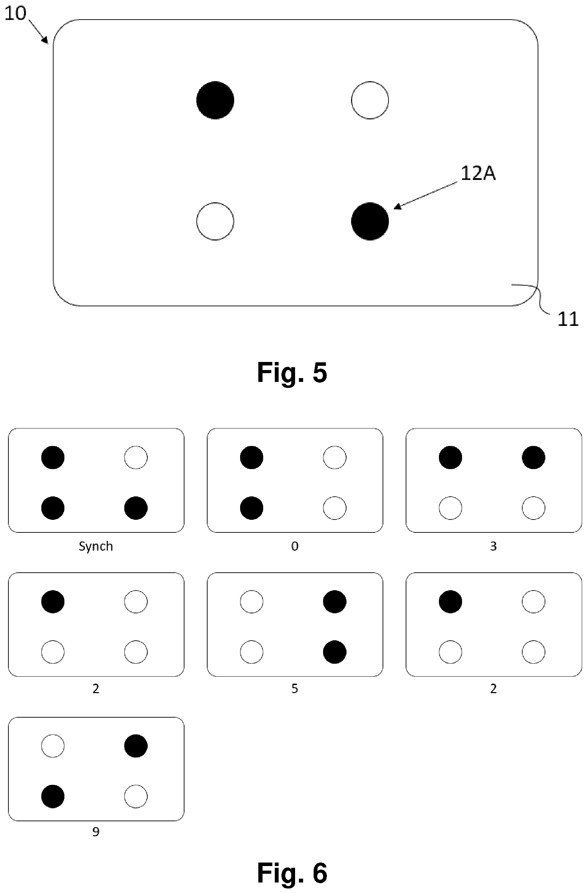

Finally, if the intent is to reduce the number of capacitive points concurrently activated, a serial implementation of the proposed solution can be used, where four configurable capacitive points 12 are used (referred as case D). An example of this implementation is illustrated in Fig. 5. Let refer to the points as A the top-right point, B the top-left point, C the bottom-right point, and D the bottom-left point. In this case, a series of configurations are alternated, being the first a synchronization one, allowing also to avoid symmetry problems. As such, whit configuration will use 3 active capacitive points 12A, for instance B, C, and D. The following elements in the series are the codification of the 6 digits of the code, using, for instance, the following code: {0=B+D, 1=A, 2=B, 3=A+B, 4=C, 5=A+C, 6=B+C, 7=B+C, 8=D, and 9=A+D}. In this way, no digit can be confused for the synchronization element. On the basis of that, the whole cycle of elements (the synchronization one plus the 6 digits of the code) should last for a duration which is a sub-multiple of the duration of the code itself, so that, if a new code must be generated, a new representation of it begins, starting with the synchronization element. An example of a code encoding using this implementation is shown in Fig. 6.

The chosen implementation among the proposed cases should be evaluated on the basis of the requirement of the target system and device ecosystem. For instance, on the basis of the maximum number of capacitive points 12 that are activated at the same time (6 for case A, 12 for case B, 8 for case C, 3 for case D). Similarly, a lower overall number of capacitive points 12 in the capacitive matrix, allows for bigger and more distanced points, and hence for a lower error probability while reading them. The precision of the capacitive screen of reference should be taken into account.

In some embodiments, the capacitive points 12 can be used to encode a generic code, not necessary the 6 digit standard one, but being able in the case to store a much higher quantity of information, including devoting a section of the card 10 to the code encoding and another section of the card 10 to encoding, for instance, metadata about the service and/or the provider and/or the card end-user, or other data of interest in the context of the card usage. As an alternative, metadata can be encoded using another coding dimension (e.g., the size and/or shape of the capacitive points 12, on the basis of a predetermined encoding system including these elements).

In order to reduce the battery usage, a code actualization can be triggered by the integrated switch/key 18 when the user needs to perform an authentication.

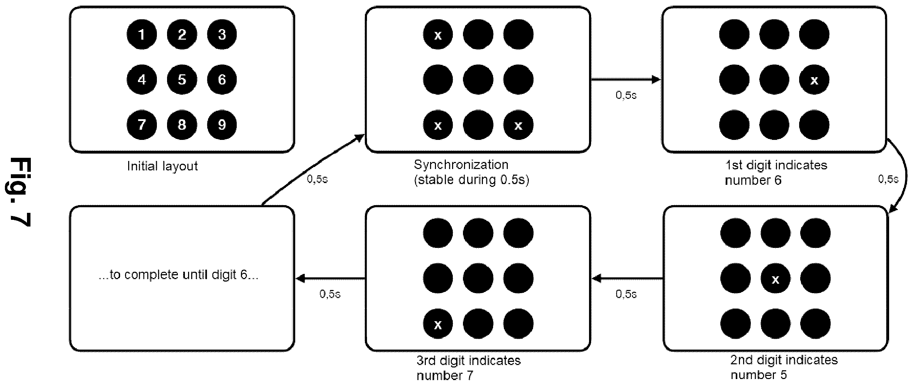

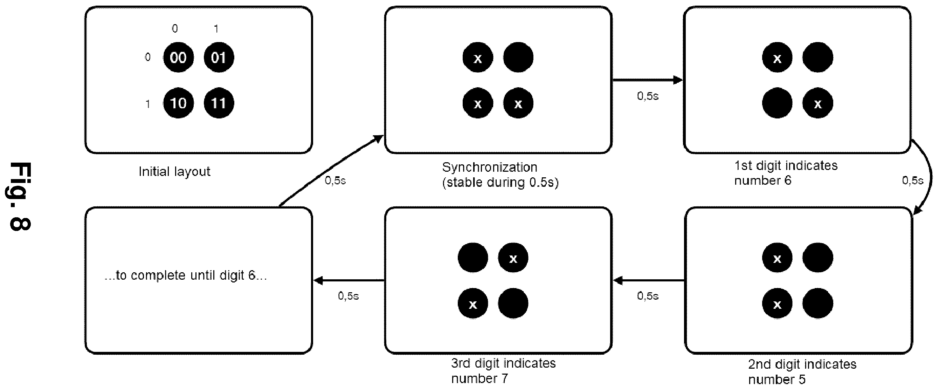

With reference now to Figs. 7 and 8 (this latter figure being similar to Fig. 6), therein two other embodiments of the transmission sequence of the capacitive points 12 are shown. In both embodiments, the transmission of the digits is done in series, particularly, one after the other, thus less capacitive points are used making the solution simpler. To establish the start of the transmission and the position of the card 10 a reference indicator comprising marking three of the four corners during a specific period of time is used as synchronization marker. This period of time determines the transmission rate of the rest of the digits of the sequence. That is, if for example the three corners are activated for 0.5 seconds, the next digit of the sequence will be displayed for 0.5 seconds, and so on. Alternatively, another option would be to perform a flashing at the synchronization to mark the time at which to transmit the rest of the digits of the sequence. When the transmission of all the digits is finished (6 in the case of TOPT) it goes straight back to the beginning, marking the three corners for synchronization and orientation again. This is repeated in a cyclic manner.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

The scope of the present invention is defined in the following set of claims.

## Claims

1. A system for user authentication and/or authorization, comprising:
- a computing device with a capacitive screen; and
- a card (10) having a surface (11) that includes a matrix of capacitive points (12), **characterized in that:**
- said card (10) further includes, embedded therein:
a controller (13),
a time element (14) connected to said controller (13),
a battery (15) configured to power supply said controller (13) and said time element (14), and
a memory (16) configured to store at least one portion of at least one authentication and/or authorization code pattern for a user, the at least one authentication and/or authorization code pattern being represented through some activated capacitive points (12A) of said matrix of capacitive points (12),
wherein the capacitive points (12) are activated by the controller (13) executing a given transmission sequence, said transmission sequence comprising:
using a reference indicator as a location and/or synchronization marker, and
serially activating the capacitive points (12), wherein when the activation of the capacitive points (12) is completed said transmission sequence is repeated,
such that when said surface (11) of the card (10) is placed in direct contact with said capacitive screen, the computing device is configured to sense and translate the activated capacitive points (12A) to a corresponding user authentication and/or authorization code number.

2. The system of claim 1, wherein said memory (15) is further configured to store at least one portion of a plurality of different authentication and/or authorization code patterns for the user, each one of said different authentication and/or authorization code patterns being representable through some activated capacitive points of the matrix of capacitive points.

3. The system of claim 1 or 2, wherein:
said computing device is configured to store another portion of the at least one authentication and/or authorization code pattern or of the different authentication and/or authorization code patterns; or
said memory (16) is configured to store all the portions of the at least one authentication and/or authorization code pattern or of the different authentication and/or authorization code patterns.

4. The system of any one of the previous claims, wherein the card (10) further includes embedded therein a communication port (17) to charge the battery (15), to synchronize the time element (14) and/or to select a given service for which to authenticate and/or authorize the user.

5. The system of any one of the previous claims, wherein the card (10) further includes embedded therein a switch (18) and one or more light indicators (19).

6. A method for user authentication and/or authorization, comprising:
providing a card having a surface that includes a matrix of capacitive points, the card further having embedded therein a controller, a time element connected to the controller, a battery for power supply the time element and the controller, and a memory storing at least one portion of at least one authentication and/or authorization code pattern for a user;
providing, by the controller, the at least one authentication and/or authorization code pattern by activating some of the capacitive points of the matrix of capacitive points following a given transmission sequence, said transmission sequence comprising using a reference indicator as a location and/or synchronization marker and serially activating the capacitive points, wherein when the activation of the capacitive points is completed said transmission sequence is repeated; and
once the card is placed in direct contact with a capacitive screen of a computing device, the computing device sensing and translating the activated capacitive points to a corresponding user authentication and/or authorization code number.

7. The method of claim 6, wherein the reference indicator is used during a given period of time, which establishes a transmission rate at which to perform the serial activation of the capacitive points.

8. The method of claim 6 or 7, wherein the serial activation of the capacitive points comprises activating the capacitive points one by one.

9. The method of any one of the previous claims 6-8, wherein the memory further stores at least one portion of a plurality of different authentication and/or authorization code patterns for the user, each one of said different authentication and/or authorization code patterns being representable through some activated capacitive points of the matrix of capacitive points.

10. The method of any one of the previous claims 6-9, wherein the computing device stores another portion of the at least one authentication and/or authorization code pattern or of the different authentication and/or authorization code patterns.

11. The method of any one of the previous claims 6-9, wherein the memory stores all the portions of the at least one authentication and/or authorization code pattern or of the different authentication and/or authorization code patterns.

12. The method of any one of the previous claims 6-11, further comprising charging the battery and/or synchronizing the time element via a communication port embedded in the card.

13. The method of claim 12, further comprising:
using a communication port embedded in the card to select a given service for which to authenticate and/or authorize the user; or
using a switch embedded in the card to select a given service for which to authenticate and/or authorize the user and signaling the selected given service by means of one or more light indicators embedded in the card.

14. The method of claim 6 or 7, wherein the reference indicator comprises one or more reference points, which is/are external to the at least one authentication and/or authorization code pattern, or wherein the reference indicator comprises a flashing signal.

15. A card for user authentication and/or authorization, the card (10) having a surface (11) that includes a matrix of capacitive points (12) and including, embedded therein:
a controller (13),
a time element (14) connected to said controller (13),
a battery (15) configured to power supply said controller (13) and said time element (14), and
a memory (16) configured to store at least one portion of at least one authentication and/or authorization code pattern for a user, the at least one authentication and/or authorization code pattern being represented through some activated capacitive points (12A) of said matrix of capacitive points (12),
the controller (13) being configured to activate the capacitive points (12) by means of executing a given transmission sequence, said transmission sequence comprising using a reference indicator as a location and/or synchronization marker, and serially activating the capacitive points (12), wherein when the activation of the capacitive points (12) is completed said transmission sequence is repeated.
